# EUROPÄISCHE PATENTSCHRIFT

(11) **EP 4 454 868 B1**
(45) Veröffentlichungstag und Bekanntmachung des Hinweises auf die Patenterteilung: **24.06.2026**
(21) Anmeldenummer: 23169585.9
(22) Anmeldetag: 24.04.2023
(51) Int. Cl.: B29C 65/78, B29C 65/08, B29L 31/30, B29L 31/00

(54) **RUNDSONOTRODE MIT INTERN GEKLEMMTER TEILEAUFNAHME**
ROUND SONOTRODE WITH INTERNALLY CLAMPED PART RETAINER
SONOTRODE RONDE AVEC LOGEMENT DE PIÈCE SERRÉE INTÉRIEUREMENT

(43) Veröffentlichungstag der Anmeldung: 30.10.2024
(73) Patentinhaber: PP-Tech Gmbh, 76275 Ettlingen (DE)
(72) Erfinder: OCHS, Alexander, 76275 Ettlingen (DE); OCHS, Marco, 76275 Ettlingen (DE); SCHNEIDER, Markus, 76275 Ettlingen (DE)
(74) Vertreter: Hoefer & Partner Patentanwälte mbB

(56) Entgegenhaltungen:
- DE-A1- 102014 111 661
- US-A- 4 029 911

## Beschreibung

Die Erfindung betrifft eine Rundsonotrode für eine Ultraschallschweißanlage zum Verschweißen von zwei Bauteilen mittels Ultraschall, aufweisend einen ringförmigen Schweißbereich und einen Aufnahmedorn zur Aufnahme eines zu verschweißenden Bauteils.

Rundsonotroden zum Verschweißen von zwei Bauteilen aus Kunststoff, insbesondere zum Anbringen eines Halters für Ultraschall-Abstandssensoren, sogenannte Park-Distance-Control (PDC-)Sensoren, am Innenbereich eines Stoßfängers sind bekannt. Eine Herausforderung besteht darin, die Halter mit dem Stoßfänger sicher zu verbinden, ohne dabei die bereits lackierte Außenseite des Stoßfängers zu beschädigen. Zudem ist der Halter in Bezug auf eine Ausnehmung im Stoßfänger, in welcher der Sensor angebracht wird, auszurichten und in dieser Position zu verschweißen. Für derartige Schweißaufgaben haben sich Rundsonotroden, welche auch als Ringsonotroden bezeichnet werden, etabliert. Aus DE 10 2014 212 313 A1 ist eine becherförmige Torsionssonotrode bekannt, welche zu torsionalen Ultraschallschwingungen um eine zentrale Torsionsachse angeregt wird. In der zentrale Torsionsachse ist eine Positioniereinrichtung angebracht, welche mit dem Boden der Ausnehmung verschraubt ist. Eine radial resonante, becherförmige Sonotrode, bei welcher ein Positionierungselement kraftschlüssig im Boden der becherförmigen Ausnehmung angebracht ist, ist aus DE 20 2017 104 190 U1 bekannt. Mit solchen Konzepten wurde gezeigt, dass ein Verschweißen von Kunststoffbauteilen mittels Rundsonotroden zu sehr guten Ergebnissen führt. Bei longitudinal resonanten Rundsonotroden ist eine Verschraubung der Positioniereinrichtung zentral am Boden der becherförmigen Ausnehmung nachteilig, da hier selbst bei Anordnung der Verschraubung des Positionierungselements in einem Schwingungsknoten Reibung in der Gewindeverbindung auftritt. Dies kann zu einem erhöhten Verschleiß wie auch zu einem Lösen der Verschraubung führen.

In DE 10 2015 103 799 A1 wird neben einer Verschraubung des Zentrierdorns im Boden der becherförmigen Sonotrode vorgeschlagen, den Zentrierdorn von der becherförmigen Sonotrode zu entkoppeln. Dazu wird eine schwimmend gelagerte Halterung für den Zentrierdorn vorgesehen, welche durch zwei Ausnehmungen am Umfang der Sonotrode in diese hineinragt, sodass der Zentrierdorn innerhalb der becherförmigen Sonotrode angeordnet werden kann. Eine Entkopplung des Zentrierdorns ist ebenfalls in DE 10 2013 202 766 A1 beschrieben. Nachteilig an der entkoppelten Aufhängung des Zentrierdorns ist zum einen die aufwendige konstruktive und auch kostenintensive Umsetzung. Zudem gestaltet sich ein Wechsel der Sonotrode aufgrund der separaten Befestigung von Sonotrode und Zentrierdorn aufwendig.

Die Aufgabe der vorliegenden Erfindung besteht darin, eine in Bezug auf ihre Schwingungseigenschaften verbesserte Rundsonotrode mit einem Aufnahmedorn bereitzustellen, die als longitudinal schwingende Sonotrode ausgelegt sein kann.

Die Aufgabe wird durch eine Rundsonotrode mit einem Aufnahmedorn gemäß Anspruch 1 gelöst. Bevorzugte Ausführungsformen der erfindungsgemäßen Rundsonotrode ergeben sich aus den Unteransprüchen.

Die erfindungsgemäße Rundsonotrode für eine Ultraschallschweißanlage zum Verschweißen von zwei Bauteilen weist einen sich in einer Längsrichtung erstreckenden Sonotrodenkörper mit einer zentralen Ausnehmung auf. An einer ersten Stirnseite des Sonotrodenkörpers ist ein ringförmiger Schweißbereich angeordnet. In der zentralen Ausnehmung ist ein Aufnahmedorn zur Aufnahme eines ersten der zwei zu verschweißenden Bauteile angeordnet. Der Aufnahmedorn ist mittels eines bei der Montage verformten Spreizelements in der zentralen Ausnehmung gehalten.

Der Sonotrodenkörper ist üblicherweise im wesentlich rotationssymmetrisch um eine in Längsrichtung sich erstreckende zentrale Längsachse ausgebildet. Der Aufnahmedorn erstreckt sich auf der zentralen Achse, sodass der ringförmige Schweißbereich, die zentrale Ausnehmung und der Aufnahmedorn konzentrisch zueinander ausgebildet sind. Der Schweißbereich kann dabei, wie im Stand der Technik üblich, beispielsweise mit axial vorstehenden Noppen bestückt sein, welche in den Kunststoff der zu verschweißenden Bauteile eindringen und diesen durch die Ultraschallschwingungen auf eine Schweißtemperatur erwärmen.

Der Aufnahmedorn kann verschiedene Funktionen erfüllen. Eine erste Funktion kann darin bestehen, ein erstes zu verschweißendes Bauteil wie beispielsweise einen Halter für ein Ultraschall-Abstandssensor aufzunehmen und zu halten. Dazu weist der Aufnahmedorn eine zu einer Innenkontur des ersten Bauteils korrespondierende Außenkontur auf, sodass das erste zu verschweißende Bauteil den Aufnahmedorn in seinem Inneren aufnimmt und diesen umgibt. Das erste zu verschweißende Bauteil weist somit eine zentrale Öffnung oder Bohrung auf, sodass es auf den Aufnahmedorn geschoben werden kann. Eine weitere Funktion kann in der rotatorischen Ausrichtung des ersten zu verschweißenden Bauteils liegen. Dies kann dadurch erfolgen, dass die Außenkontur des Aufnahmedorns und auch die komplementär ausgebildete Innenkontur des ersten zu verschweißenden Bauteils nicht rotationssymmetrisch ausgebildet sind, sondern radiale Vorsprünge oder Ausnehmungen aufweisen, um eine eindeutige rotationssymmetrische Ausrichtung des ersten Bauteils zu gewährleisten. Hierzu ist zudem der Aufnahmedorn rotationsfest und in einer vorbestimmten rotatorischen Position relativ zum Sonotrodenkörper beziehungsweise zur Ultraschallschweißanlage anzuordnen. Eine dritte Funktion des Aufnahmedorns kann darin bestehen, dass das zweite Bauteil auf dem Aufnahmedorn, beispielsweise ein Stoßfänger, an dem Aufnahmedorn ausgerichtet beziehungsweise zentriert wird. Durch die Ausrichtung von Aufnahmedorn und dem zweiten zu verschweißenden Bauteil wird auch das erste Bauteil, dessen Position durch den Zentrierdorn definiert ist, am zweiten Bauteil ausgerichtet. Hierdurch erfolgt eine Ausrichtung der beiden zu verschweißenden Bauteile vor und während des Ultraschallschweißvorgangs.

Wie vorstehend bereits ausgeführt, ist der Aufnahmedorn über das Spreizelement, das bei der Montage verformt wird, in der zentralen Ausnehmung gehalten. Durch das Verbinden des Aufnahmedorns mittels des Spreizelements mit dem Sonotrodenkörper wird eine feste Verbindung zwischen dem Aufnahmedorn und dem Sonotrodenkörper hergestellt. Diese Verbindung wird durch Verformen des Spreizelements während der Montage des Spreizelements im Sonotrodenkörper hergestellt. Bei der Montage wird das Spreizelement radial nach außen verformt und wird somit in der Ausnehmung verspannt beziehungsweise geklemmt. Es entsteht eine kraftschlüssige Verbindung zwischen Spreizelement und Sonotrodenkörper. Das Spreizelement ist dabei vorzugsweise als Metallelement ausgebildet. Als feste Verbindung wird dabei vorzugsweise verstanden, dass es sich nicht um eine elastische oder schwingend gelagerte Aufhängung des Aufnahmedorns im Sonotrodenkörper handelt, wie beispielsweise in DE 10 2014 111 661 A1 gezeigt. Insbesondere schwingungsentkoppelte Aufhängungen über Elastomere oder Gummielemente sollen nicht als feste Aufhängung im Sinne der Erfindung verstanden werden.

Vorzugsweise ist das Spreizelement im Bereich einer Knotenfläche der Rundsonotrode angeordnet. Als Knotenfläche wird dabei eine Fläche senkrecht zur Sonotrodenachse verstanden, in welcher die Schwingungsamplitude minimal ist. Der Sonotrodenkörper kann je nach Länge und Ausgestaltung eine oder mehrere Knotenflächen aufweisen. Die Knotenfläche erstreckt sich dabei radial nach außen über den gesamten Sonotrodenkörper. Je nach konstruktiver Gestaltung des Sonotrodenkörpers verläuft die Knotenfläche jedoch nicht rein radial nach außen, sondern kann auch eine gekrümmt nach außen verlaufende Fläche darstellen. Durch die Anordnung des Spreizelements in einer Knotenfläche der Rundsonotrode wird zumindest ein Bereich des Spreizelements von der Knotenfläche geschnitten.

Zur Herstellung einer Verbindung zwischen dem Sonotrodenkörper und dem Aufnahmedorn wird das Spreizelement vorzugsweise plastisch verformt. Die plastische Verformung kann dadurch erfolgen, dass Bereiche der Außenkontur des Spreizelements durch Andrücken an die Innenkontur der Ausnehmung im Sonotrodenkörper derart verformt werden, dass eine plastisch (und damit dauerhaft) umgeformte Verbindungsfläche entsteht. Als plastische Verformung wird dabei insbesondere eine Verformung verstanden, die zu einer zumindest lokalen Überschreitung der materialabhängigen Dehngrenze R_{p0,2} führt. Die plastische Verformung tritt vorzugsweise in dem Bereich der Außenfläche des Spreizelements auf, der mit dem Sonotrodenkörper in Kontakt steht. Die Verformung ist dabei geringer als die maximal zulässige Druckspannung, d.h. die Grenzspannung im Spreizelement und auch im Sonotrodenkörper, die zu einer Zerstörung der Bauteile führt. Bei der plastischen Verformung werden vorzugsweise die maximal zulässigen Druckspannungen des Materials des Spreizelements ausgenutzt, um so eine sichere Verbindung zwischen dem Spreizelement und dem Sonotrodenkörper herzustellen. Dadurch wird eine sichere Verbindung zwischen dem Spreizelement und dem Sonotrodenkörper hergestellt. Als sichere Verbindung wird insbesondere auch verstanden, dass das Spreizelement und damit der Aufnahmedorn im Betrieb der Sonotrode, das heißt in einem in Eigenfrequenz der Sonotrode angeregten Schwingungszustand, sicher in Position gehalten wird. Neben der plastischen Verformung der Kontaktbereiche können auch weitere Bereiche des Spreizelements plastisch verformt werden. Beispielsweise kann beim radialen Spreizen des Spreizelements eine plastische Verformung derart erfolgen, sodass das Spreizelement in eine gespreizte Position plastisch verformt wird. Auch kann der Konus bei der Montage plastisch verformt werden.

Vorzugsweise ist das Spreizelement nach Art eines Dübels ausgebildet. Zum Spreizen des Dübels weist dieser vorzugsweise eine konische Innenfläche auf und der Dübel und damit das gesamte Spreizelement werden durch einen eingetriebenen Konus aufgespreizt. Bei der Montage wird der Konus in den Dübel unter Kraft eingebracht, sodass sich das Spreizelement radial nach außen aufweitet. Der Konus hat somit die Funktion eines dreidimensionalen Keils, welcher den Dübel in alle Richtungen aufweitet. Durch das Einbringen des Konus greift somit zumindest ein Abschnitt der kegelförmigen Außenfläche in die konische Innenfläche ein und bewirkt eine radiale Kraft. Der Konus und die konische Innenfläche weisen vorzugsweise zumindest bereichsweise kongruente Oberflächenkonturen auf. Der Konus weist dabei zumindest einen Kegelabschnitt in Form eines Kegelstumpfes auf, kann jedoch auch als Kegel mit einer Spitze ausgebildet sein.

Der Konuswinkel wie auch der Kegelwinkel der konischen Innenfläche sind vorzugsweise derart ausgebildet, dass Selbsthemmung vorliegt. Die Selbsthemmung liegt dann vor, wenn der Konus unter Kraft in den Dübel eingebracht wird und mit der konischen Innenfläche in Eingriff steht. Dabei verhindert die Selbsthemmung ein Herausrutschen des Konus aus dem konischen Abschnitt entgegen der Einbringrichtung. Es wird verhindert, dass sich die Klemmverbindung zwischen dem Spreizelement und dem Sonotrodenkörper insbesondere im Betrieb der Sonotrode löst.

Alternativ oder zusätzlich zu der Fixierung des Konus durch Selbsthemmung kann der Konus mechanisch fixiert sein. Eine Fixierung des Konus in seiner Position nach der Montage kann dabei durch eine Schraube erfolgen, welche in Längsrichtung in das Spreizelement, das heißt in Einbringrichtung des Konus, eingeschraubt wird und mit einer Grundfläche des Konus in Kontakt steht. Dadurch wird ein Herauswandern des Konus ebenfalls wirksam verhindert. Die Schraube kann zusätzlich durch bekannte Mittel wie Verkleben oder mechanische Schraubensicherungen fixiert werden.

Vorzugsweise weist das Spreizelement zumindest einen Längsschlitz auf. Der zumindest eine Längsschlitz erstreckt sich dabei vorzugsweise über einen Abschnitt in Längserstreckung des Spreizelements und ermöglichen ein vereinfachtes radiales Aufspreizen desselben. Der zumindest eine Längsschlitz ist dabei vorzugsweise im Bereich der konischen Innenfläche in den Dübel eingebracht und erlauben ein radiales Aufspreizen desselben bei Einbringen des Konus. Vorzugsweise weist das Spreizelement zwei, drei, vier oder mehr Längsschlitze auf, welche vorzugsweise gleichmäßig über den gesamten Umfang des Spreizelements verteilt sind, das heißt um den gleichen Winkelbetrag versetzt zueinander angeordnet sind.

Die konische Innenfläche des Spreizelements ist vorzugsweise derart ausgebildet, dass sich die Konizität entlang der Längsachse erstreckt. Somit kann die konische Innenfläche des Spreizelements zur ersten Stirnseite, das heißt zum Schweißbereich hin, geöffnet sein und sich vergrößern oder zu einer gegenüberliegenden zweiten Stirnseite hin geöffnet sein und sich vergrößern. Bei der konischen Innenfläche und bei dem Konus sollen auch Oberflächenformen mit umfasst sein, die sich in Eintreibrichtung des Konus verjüngen, jedoch nicht streng konisch sind, wie beispielsweise konvex oder konkav sich verjüngenden Oberflächen. In der ersten Alternative wird der Konus vorzugsweise an der ersten Stirnseite in den Sonotrodenkörper eingebracht, wohingegen bei der zweiten Alternative der Konus üblicherweise auf der Seite der zweiten Stirnseite eingebracht wird.

Das Spreizelement weist vorzugsweise wenigstens einen radialen Vorsprung auf. Der radiale Vorsprung ist an einer Außenseite des Spreizelements, insbesondere radial außerhalb der konischen Innenfläche, angeordnet und erstreckt sich nach außen. Der radiale Vorsprung ist dabei vorzugsweise umlaufend, das heißt ringförmig an einer zylindrischen Außenkontur des Spreizelements ausgebildet. Insbesondere weist das Spreizelement eine zylindrische Form mit radial sich nach außen erstreckenden ringförmigen Vorsprüngen auf. Der zumindest eine umlaufende Vorsprung kann durch die Längsschlitze unterbrochen werden.

Der zumindest eine radiale Vorsprung ist vorzugsweise in der Knotenfläche angeordnet. Bei einer Vielzahl von radialen Vorsprüngen am Spreizelement ist vorzugsweise ein der ersten Stirnseite zugewandter radialer Vorsprung der Vielzahl von Vorsprüngen in der Knotenfläche angeordnet. Die weiteren Vorsprünge sind somit weiter vom Schweißbereich entfernt in Richtung der zweiten Stirnseite hin versetzt angeordnet. Dies hat den Vorteil, dass der Klemmbereich, welcher am nächsten zu einer Spitze des Aufnahmedorns hin angeordnet ist, im Bereich der geringsten Schwingungsamplitude sich befindet.

Der zumindest eine radiale Vorsprung greift vorzugsweise in eine Ausbuchtung in der zentralen Ausnehmung ein. Der zumindest eine Vorsprung kann dabei eine bereichsweise konvex oder auch parabelförmig nach außen gekrümmt Oberfläche aufweisen. Die Ausbuchtung weist vorzugsweise einen Querschnitt auf, der im Wesentlichen formkongruent zu dem des radialen Vorsprungs ausgebildet ist. Bei einer Ausbildung mit einem einzigen umlaufenden Vorsprung kann dieser einen im Wesentliche runden, insbesondere im Wesentlichen halbrunden, radial nach außen sich erstreckenden Querschnitt aufweisen. Der umlaufende Vorsprung kann durch Längsschlitze unterbrochen sein. Der Vorsprung greift in eine umlaufende Ausbuchtung, beispielsweise in Form einer Nut, ein, die in die Oberfläche der zentralen Ausnehmung eingearbeitet ist. Die Nut ist umlaufend ausgebildet und weist vorzugsweise ebenfalls einen halbrunden Querschnitt auf.

Bei einer Vielzahl von radialen Vorsprüngen sind diese vorzugsweise als im Wesentlichen halbkugelförmige Vorsprünge ausgebildet. Die Vorsprünge sind dabei vorzugsweise axial in einer identischen Position am Spreizelement angeordnet und gleichmäßig am Umfang verteilt. Die Ausbuchtung kann bei einer Vielzahl von Vorsprüngen, die in einer Projektion in Radialrichtung einen kreisrunden Querschnitt aufweisen, als radiale Bohrungen im Sonotrodenkörper ausgebildet sein. Dies hat den Vorteil, dass dadurch neben einer axialen Positionierung des Spreizelements und des Aufnahmedorns auch eine rotatorische Positionierung erfolgt. Der zumindest eine Vorsprung kann zur Positionierung in die Ausnehmung einschnappen. Danach wird das Spreizelement beispielsweise durch Einbringen des Konus gespreizt und dadurch im Sonotrodenkörper fixiert. Beim Spreizen wird vorzugsweise die Oberfläche des zumindest einen Vorsprungs plastisch verformt. Zudem wird das Spreizelement durch die Ausbuchtung nicht (ausschließlich) reibschlüssig, sondern formschlüssig in seiner Position gehalten.

Vorzugsweise ist der Aufnahmedorn mit dem Spreizelement verschraubt. Durch die Klemmung des Spreizelements werden idealerweise keine Schwingungen auf den Aufnahmedorn übertragen. Dadurch ist die Verschraubung des Aufnahmedorns in einem Bereich angeordnet, welcher keine oder nur geringe Schwingungen aufweist, und somit sich die Verschraubung im Betrieb nicht löst bzw. zu einer reduzierten Lebensdauer der Bauteile im Gewindebereich führt. Ein Lösen kann selbstverständlich zusätzlich durch gängige Schraubensicherungsmethoden verhindert werden.

Vorzugsweise ist der Aufnahmedorn mehrteilig ausgebildet und weist zumindest ein Dornelement auf, welches in Längsrichtung der Rundsonotrode verschieblich auf einem Bolzen angeordnet ist. Vorzugsweise ist demnach der Bolzen mit dem Spreizelement verbunden, vorzugsweise verschraubt, und das Dornelement ist auf dem Bolzen verschieblich geführt. Dazu weist das Dornelement vorzugsweise eine Ausnehmung auf, in welche der Bolzen eingreift. Der Bolzen kann dabei zylindrisch ausgebildet sein und zumindest im Bereich der Führung des Dornelements nicht rotationssymmetrisch, sodass ein Verdrehen des Dornelements verhindert wird. Weiter vorzugsweise ist das Dornelement über ein Vorspannelement in Längsrichtung von Spreizelement weg vorgespannt. Dadurch kann das Dornelement, welches das erste zu verschweißende Bauteil aufnimmt, dieses gegenüber dem zweiten zu verschweißenden Bauteil vorspannen, bevor der Schweißbereich der Rundsonotrode mit dem ersten zu verschweißenden Bauteil in Eingriff gelangt. Dadurch wird das erste zu verschweißende Bauteil insbesondere während des Schweißvorgangs, sicher am zweiten zu verschweißenden Bauteil gehalten und gegenüber diesem positioniert und fixiert. Durch die schwingungsarme Lagerung des Spreizelements werden auch im Betrieb während des Schweißvorgangs keine oder nur geringe Amplituden auf das Dornelement übertragen, sodass eine sichere Fixierung des ersten Bauteils am zweiten Bauteil gewährleistet ist.

Das Dornelement ist dabei zur Aufnahme des ersten Bauteils, wie oben in Bezug auf den Aufnahmedorn beschrieben, ausgebildet. Ferner kann er Aufnahmedorn die übrigen Funktionen wie die rotatorische Ausrichtung des ersten Bauteils und Zentrierung des zweiten Bauteils aufweisen.

Vorzugsweise ist die Rundsonotrode als longitudinal resonante Rundsonotrode ausgebildet. Hierfür ist insbesondere die Resonanz des Sonotrodenkörpers ausschlaggebend. Durch die Ausgestaltung der Rundsonotrode mit einem Sonotrodenkörper lässt sich der Sonotrodenkörper an Schwingungseigenschaften insbesondere an die Resonanzfrequenz für das Ultraschallschweißen anpassen. Die Rundsonotrode wird im Betrieb, das heißt beim Ultraschallschweißen, von einem Schallerzeuger in ihrer Resonanzfrequenz zu Schwingungen in Längsrichtung angeregt. Somit entsteht ein System aus Schallerzeuger und Rundsonotrode, bei dem die Rundsonotrode vorzugsweise longitudinal in einer Frequenz von beispielsweise 35 kHz angeregt wird. Durch die Klemmung des Spreizelements in einer Knotenfläche hat dieser idealerweise keinen oder nur einen geringen negativen Einfluss auf das Schwingverhalten der Sonotrode.

Die longitudinal resonante Rundsonotrode ist vorzugsweise derart dimensioniert, dass der Sonotrodenkörper vorzugsweise die Länge einer vollen Wellenlänge aufweist. Der Sonotrodenkörper ist vorzugsweise an der zweiten Stirnseite mit dem Schallerzeuger verbunden. Hierzu weist der Sonotrodenkörper vorzugsweise an der zweiten Stirnseite eine Aufnahme zum Einleiten von Schwingungen auf. Vorzugsweise ist in die zweite Stirnseite eine Gewindebohrung eingebracht, mittels welcher der Sonotrodenkörper auf den Schallerzeuger aufgeschraubt wird. Zudem kann die zweite Stirnseite eine Anlagefläche darstellen, welche in Kontakt mit einer Fläche des Schallerzeugers steht und die Schwingungen überträgt.

Die zentrale Ausnehmung erstreckt sich vorzugsweise in Längsrichtung über den gesamten Sonotrodenkörper. Der Sonotrodenkörper ist somit als Hohlzylinder ausgebildet, wobei sowohl der Innen- als auch der Außendurchmesser über seine Länge variieren können. Der innere Hohlraum erstreckt sich somit von der zentralen Ausnehmung im Schweißbereich über einen zylindrischen Bereich, in welchem das Spreizelement angeordnet ist, zu der Gewindebohrung, mittels welcher die Rundsonotrode beziehungsweise der Sonotrodenkörper mit dem Schallwandler verschraubt wird.

Bei einer Dimensionierung der Rundsonotrode, bei welcher die Länge des Sonotrodenkörpers eine volle Wellenlänge aufweist, umfasst die Rundsonotrode zwei Knotenflächen. Ferner umfasst der Sonotrodenkörper drei Bereiche mit Schwingungsmaxima, nämlich im Bereich der Schwingungseinleitung an der zweiten Oberfläche, im Schweißbereich an der ersten Oberfläche sowie dazwischen. Übliche Schwingungsmaxima bei Sonotroden zum Verschweißen von zwei Kunststoffbauteilen aus Polypropylen betragen bei einer Anregungsfrequenz von 35 kHz etwa 25 µm. Vorzugsweise sind die Flächen der Amplitudenmaxima am Anfang und am Ende sowie auf halber Länge des Sonotrodenkörpers und die Knotenflächen bei einem Viertel und drei Vierteln der Länge des Sonotrodenkörpers ausgebildet. Das Spreizelement ist vorzugsweise in einer der ersten Stirnseiten abgewandten Knotenfläche angeordnet beziehungsweise einer der zweiten Stirnseite zugewandten Knotenfläche angeordnet. Dadurch ist das Spreizelement weiter weg vom Schweißbereich und näher am Befestigungsbereich, über welchen die Schwingungen eingeleitet werden, angeordnet.

Das Spreizelement ist vorzugsweise aus einem weicheren Material als der Sonotrodenkörper ausgebildet. Dies trifft insbesondere auf den Dübel des Spreizelements zu. Bei Rundsonotroden zum Ultraschallschweißen wird der Sonotrodenkörper vorzugsweise aus einer Titanlegierung, einem Werkzeugstahl oder einer hochfesten Aluminiumlegierung hergestellt. Als weicheres Material für das Spreizelement wird vorzugsweise Messing verwendet. Beim Aufspreizen des Spreizelements und insbesondere des Messingdübels wird dieser plastisch an der Innenfläche des Sonotrodenkörpers verformt. Durch die Verwendung eines weicheren Materials für das Spreizelement kann dieses plastisch verformt werden, ohne dass der Sonotrodenkörper insbesondere plastisch verformt wird. Die Klemmung des aus dem weicheren Material bestehenden Spreizelements erfolgt üblicherweise über einen vordefinierten Klemmbereich längs des Sonotrodenkörpers und kann, wie oben beschrieben, über ringförmige Vorsprünge bewerkstelligt werden. Somit befinden sich auch Abschnitte des Klemmbereichs außerhalb der Knotenfläche. Die im Sonotrodenkörper entstehenden Bewegungen in Longitudinalrichtung als auch die daraus resultierenden Querkontraktionen des Sonotrodenkörpers können durch das weichere Material aufgenommen werden, ohne dass die Schwingungen (in vollem Umfang) auf den Aufnahmedorn übertragen werden. Die nach der plastischen Verformung des Spreizelements verbleibenden Spannungen sind höher als die Spannungen, die sich durch die Bewegungen im Kontaktbereich zwischen Sonotrode und Spreizelement ergeben. Dadurch kommt es gerade zu keiner Relativbewegung an den Kontaktflächen zwischen dem Sonotrodenkörper und dem Spreizelement und der Aufnahmedorn bleibt in seiner Position. Trotzdem liegt eine feste Verbindung zwischen Sonotrodenkörper und Aufnahmedorn vor, insbesondere im Bereich der Knotenfläche.

Weitere Vorteile, Details und Ausführungsbeispiele werden nun anhand der nachfolgenden Figuren näher erläutert. Dabei zeigen:
- Figur 1: eine erfindungsgemäße Rundsonotrode mit einem Aufnahmedorn;
- Figur 2: den Amplitudenverlauf längs des Sonotrodenkörpers einer erfindungsgemäßen Rundsonotrode;
- Figur 3a, b: eine erste Ausführungsform eines erfindungsgemäßen Dübels in Schnittansicht und Seitenansicht;
- Figur 4a, b: eine zweite Ausführungsform eines erfindungsgemäßen Dübels in Schnittansicht und Seitenansicht;
- Figur 5: eine zweite Ausführungsform einer erfindungsgemäße Rundsonotrode mit einem Aufnahmedorn;
- Figur 6a, b: eine dritte Ausführungsform eines erfindungsgemäßen Dübels in Schnittansicht und Seitenansicht;
- Figur 7: eine dritte Ausführungsform einer erfindungsgemäße Rundsonotrode mit einem Aufnahmedorn; und
- Figur 8a, b: eine vierte Ausführungsform eines erfindungsgemäßen Dübels in Schnittansicht und Seitenansicht.

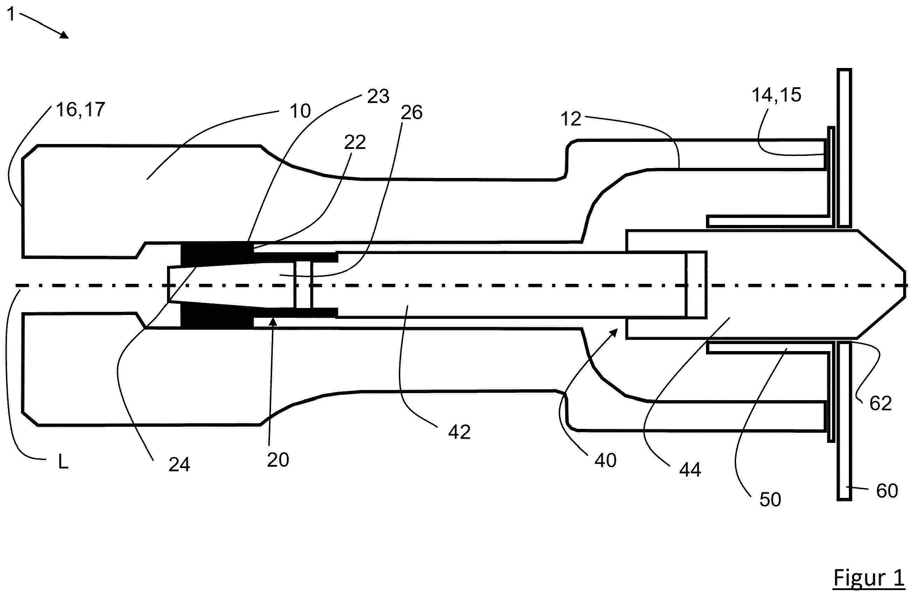

Figur 1 zeigt beispielhaft eine erfindungsgemäße Rundsonotrode 1. Die Rundsonotrode 1 weist einen Sonotrodenkörper 10 auf. Ein Grundkörper des Sonotrodenkörpers 10 ist rotationssymmetrisch um eine Längsachse L, welche auch als zentrale Achse bezeichnet werden kann, ausgebildet. Der Sonotrodenkörper 10 weist einen an einer ersten Stirnseite 15 angeordneten Schweißbereich 14 und an einer gegenüberliegenden, zweiten Stirnseite 17 einen Befestigungsbereich 16 auf. Der Sonotrodenkörper 10 weist an der ersten Stirnseite 15 eine zentrale Ausnehmung 12 auf, sodass der Schweißbereich 14 als Ringform ausgebildet ist. In der gezeigten Ausführungsform ist die zentrale Ausnehmung 12 über die gesamte Länge des Sonotrodenkörpers 10 ausgebildet, wobei sie an der ersten Stirnseite 15 einen größeren Durchmesser im Vergleich zur zweiten Stirnseite 17 aufweist. An der zweiten Stirnseite 17 ist die Ausnehmung 12 als Bohrung mit einem nicht gezeigten Gewinde ausgebildet, sodass der Sonotrodenkörper 10 mit einem nicht gezeigten Schallwandler verschraubt werden kann. Dieser liegt flächig an der zweiten Stirnseite 17 an. Durch den Schallwandler wird der Sonotrodenkörper 10 zum Schwingen angeregt, insbesondere zum Schwingen in Richtung der Längsachse L.

In der zentralen Ausnehmung 12 des Sonotrodenkörpers 10 ist ein Aufnahmedorn 40 über ein Spreizelement 20 befestigt. Die zentrale Ausnehmung 12 ist im Bereich der Anordnung des Spreizelements 20 als Bohrung konstanten Durchmessers ausgebildet.

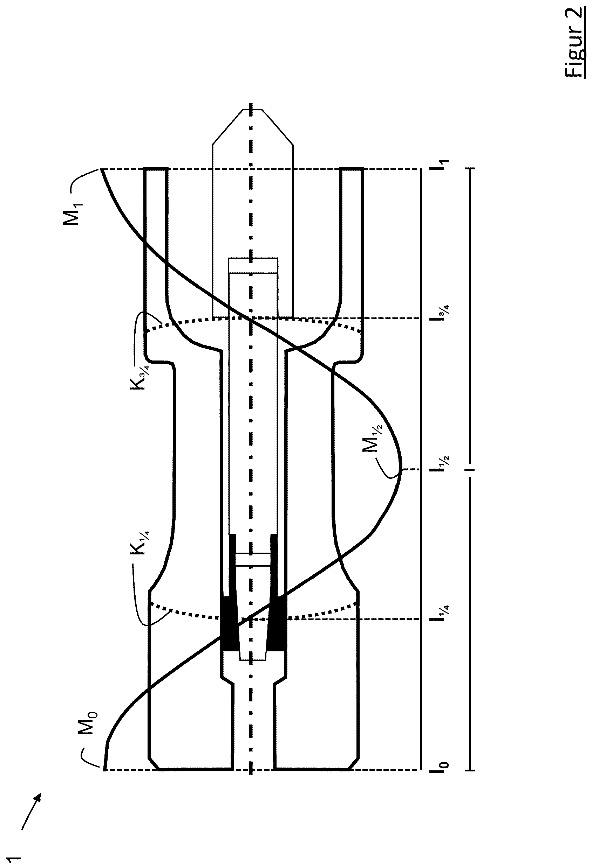

Wie aus Figur 2 zu entnehmen, weist der Sonotrodenkörper 10 die Länge I einer vollen Wellenlänge auf. Dadurch entstehen im Bereich der ersten und zweiten Stirnseite 15, 17 sowie bei ½*I die Schwingungsmaxima M₁, M₀ und M_{1/2}. Bei ¼*I sowie ¾*I entstehen Knotenpunkte beziehungsweise radial über den Sonotrodenkörper 10 sich erstreckende Knotenflächen K_{1/4} **und** K_{3/4}, in welchen die Schwingung minimal ist und somit lediglich eine geringe oder keine Verformung des Sonotrodenkörpers 10 auftritt. Die Knotenfläche verläuft dabei nicht ausschließlich radial nach außen, sondern hat auch eine Komponente in Längsrichtung. Insbesondere ist im Bereich der Knotenfläche K die Durchmesseränderung der zentralen Ausnehmung 12 durch Querkontraktion und auch die Längsschwingung minimal. Das Spreizelement 20 ist in der Knotenfläche K_{1/4} im Sonotrodenkörper 10 geklemmt. Ein Konus 26 ist in einen Dübel 22 mit einer konischen Innenfläche 24 derart eingetrieben, dass der Dübel 22 aufgespreizt ist und sich plastisch verformt hat. Dabei ist insbesondere eine Außenfläche 23 des Dübels 22 derart plastisch verformt, dass der Dübel 22 in der zentralen Ausnehmung 12 geklemmt ist und kraftschlüssig im Sonotrodenkörper 10 befestigt ist.

Mit dem Spreizelement 20 ist ein Bolzen 42 des Aufnahmedorns 40 verbunden. Auf dem Bolzen 42 ist ein Dornelement 44 in Richtung der Längsachse L beweglich angeordnet. Das Dornelement 44 ist von einer nicht gezeigten Feder vom Spreizelement 20 weg vorgespannt. Der Aufnahmedorn 40 und insbesondere das Dornelement 44 hat zum einen die Funktion, das erste Bauteil 50, beispielsweise ein Sensorhalter aus Kunststoff für einen PDC-Sensor, aufzunehmen beziehungsweise zu halten. Zudem hat das Dornelement 44 die Funktion, das erste Bauteil 50 rotatorisch auszurichten. Bei dem ersten Bauteil 50 in Form eines PDC-Halters handelt es sich um ein nicht rotationssymmetrisches Bauteil, welches in einer vordefinierten rotatorischen Ausrichtung mit dem zweiten Bauteil 60, beispielsweise einem Stoßfänger aus Kunststoff, verschweißt werden soll. Aus diesem Grund ist auch das Dornelement 44 nicht rotationssymmetrisch ausgebildet und weist beispielsweise einen radialen Positioniervorsprung beziehungsweise eine radiale Positionierausnehmung auf, welcher komplementär zu einer Innenkontur des ersten Bauteils ausgebildet ist. Ferner ist Dornelement 44 derart auf dem Bolzen 42 befestigt, dass es gegen Rotation gesichert ist.

Eine weitere Funktion des Aufnahmedorns 40 besteht in der Zentrierfunktion der beiden Bauteile 50, 60. Insbesondere liegt die Zentrierfunktion darin, eine Achse des ersten Bauteils 50 mit einer kreisrunden Ausnehmung 62 im zweiten Bauteil 60, insbesondere einer Öffnung im Stoßfänger für den PDC-Sensor, längs der Längsachse L zu zentrieren.

Zum Verschweißen der beiden Bauteile 50,60 aus Kunststoff ist zunächst das erste Bauteil 50 auf dem Aufnahmedorn 40 gehalten. Die Rundsonotrode 1 wird relativ zum zweiten Bauteil 60 in Richtung der Längsachse L auf das zweite Bauteil 60 zu bewegt. Durch die nicht gezeigte Feder, mit welcher das Dornelement 44 vorgespannt ist, wird eine Vorspannkraft zwischen dem ersten Bauteil 50 und dem zweiten Bauteil 60 erzeugt. Zum Verschweißen der beiden Bauteile 50, 60 wird durch den Schwallwandler die Rundsonotrode 1 mit einer Schwingung bei einer der longitudinalen Eigenmoden des Sonotrodenkörpers 10 angeregt und diese in Resonanz versetzt. Durch die Anordnung des Spreizelements 20 im Knotenpunkt K_{1/4} ist die auf den Aufnahmedorn 40 übertragene Schwingung gleich Null oder minimal. Dies erhöht zum einen die Positioniergenauigkeit des ersten Bauteils 50 und zum anderen wird dadurch das Schweißergebnis verbessert.

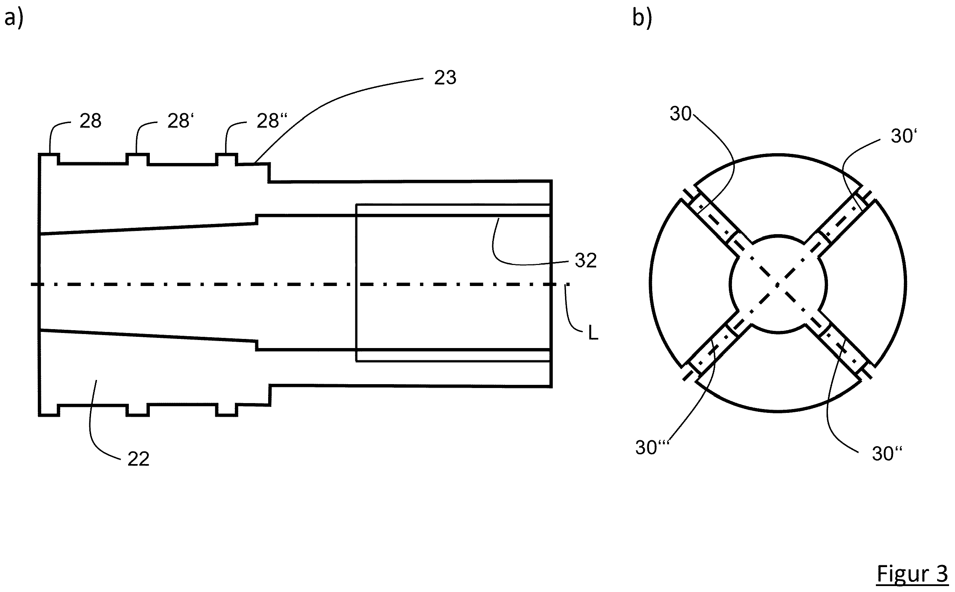

Figur 3 zeigt einen erfindungsgemäßen Dübel 22 in einer ersten Ausführungsform, wie dieser beispielsweise in Figur 1 verwendet werden kann. Figur 3a zeigt den Dübel 22 in einem Längsschnitt und Figur 3b zeigt eine Draufsicht auf die in Figur 3a links angeordnete, zweite Stirnseite des Dübels 22. Der Dübel 22 weist eine hohlzylindrische Grundform auf. Die Innenfläche des Dübels 22 weist an seinem auf der linken Seite gezeigten Ende den konischen Bereich 24 auf. Der konische Bereich 24 ist dabei derart ausgebildet, dass er sich zum Bauteilende, das heißt zu der in der Figur gezeigten zweiten Stirnseite 17 hin verjüngt. An der zum Konus 24 gegenüberliegenden Seite der Ausnehmung 12 ist ein Gewinde 32 angeordnet. Über das Gewinde 32 kann der Aufnahmedorn 40 und insbesondere der Bolzen 42 des Aufnahmedorns 40 mit dem Dübel 22 verschraubt werden. Die Außenfläche 23 des Dübels ist im Wesentlichen zylindrisch ausgebildet und weist im Bereich der konischen Innenfläche 24 drei radiale Vorsprüche 28, 28', 28" auf. Die radialen Vorsprüche 28, 28', 28" sind als umlaufende Ringe integral mit dem Dübel 22 ausgebildet.

Zudem weist der Dübel 22 im Bereich der konischen Innenfläche 24 Längsschlitze 30, 30', 30", 30‴ auf, welche in Figur 3b gezeigt sind und sich radial über den gesamten Dübel 22 erstrecken. Die einzelnen Längsschlitze 30, 30', 30", 30‴ sind jeweils um 90° zueinander versetzt angeordnet. Die konische Innenfläche 24 weist dabei einen Konuswinkel auf, der derart ausgebildet ist, dass es sich um einen selbsthemmenden Konus handelt.

Zum Befestigen des Dübels 22 im Sonotrodenkörper 10 wird der Konus 26 in den konischen Bereich 24 des Dübels 22 eingetrieben. Dies erfolgt unter Aufwendung einer vordefinierten Kraft. Hierzu kann beispielsweise eine Schraube in das Gewinde 32 unter einem vordefinierten Drehmoment eingeschraubt werden. Durch das Einbringen des Konus 26 weitet sich der Dübel 22 aus Messing auf und insbesondere die radialen Vorsprünge 28, 28', 28" verformen sich plastisch. Die plastische Verformung wird durch die vier Längsschlitze 30, 30', 30", 30‴ erleichtert und ein verbessertes Anpressen der Ringelemente gewährleistet. Durch die plastische Deformation des Dübels 22 wird das Spreizelement 20 sicher im Sonotrodenkörper 10 fixiert. Die plastische Verformung ist dabei derart ausgelegt, dass die Druckeigenspannungen des Dübels 22 aus Messing maximal sind, ohne zu einem Versagen des Bauteils zu führen. Der Sonotrodenkörper 10 ist üblicherweise aus einer Titanlegierung hergestellt. Aufgrund der Tatsache, dass es sich bei dem Material des Dübels 22 um ein weicheres Material als bei dem Sonotrodenkörper 10 handelt, kann dieser die Druckspannungen aufnehmen. Zudem ist durch eine Dimensionierung der einzubringenden Druckeigenspannungen sicherzustellen, dass keine Reibung zwischen Dübel 22 und Sonotrodenkörper 10 durch die induzierten Schwingungen auftritt, was nämlich zu einem Verschleiß führen würde.

Der dritte radiale Vorsprung 28" ist in der Knotenfläche K_{1/4} angeordnet. In der Knotenfläche K_{1/4} tritt keine Längsschwingung auf, sondern es können allenfalls minimale Querkontraktionen der zentralen Ausnehmung 12 erfolgen. Durch die plastische Verformung des Dübels 22 können diese jedoch aufgenommen und kompensiert werden. Der erste und zweite radiale Vorsprung 28, 28' befinden sich außerhalb der Knotenfläche K_{1/4} und somit tritt eine Längsschwingung des Sonotrodenkörpers 10 im Bereich dieser Vorsprünge auf. Durch die plastische Verformung des Dübels 22 ist sichergestellt, dass keine Reibung zwischen dem Dübel 22 und dem Sonotrodenkörper 10 auftritt. Durch die Ausbildung des Dübels 22 aus einem weicheren Material als der Sonotrodenkörper 10 kann dieser die in diesem Bereich minimalen Längsschwingungen kompensieren, ohne dass Reibung zwischen den Vorsprüngen 28, 28' und dem Sonotrodenkörper 10 auftritt.

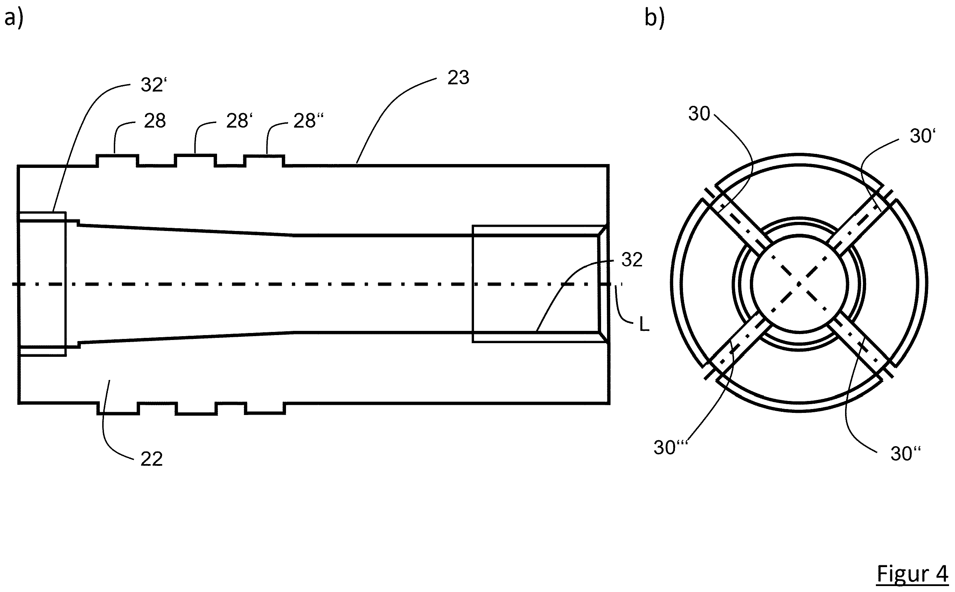

Eine alternative Ausführungsform des Dübels 22 ist in Figur 4 gezeigt. Figur 4a zeigt einen Querschnitt und Figur 4b zeigt eine Draufsicht auf die in Figur 4a links angeordnete, zweite Stirnseite des Dübels 22. Im Unterschied zum Dübel 22 aus Figur 3 verringert sich die konische Innenfläche 24 nicht zur linken Seite hin sondern weitet sich nach links hin beziehungsweise verengt sich ausgehend von der linken Stirnseite zum Gewinde 32 hin. Dadurch wird der Konus 26 nicht aus Richtung der ersten Stirnseite 15, sondern aus Richtung der zweiten Stirnseite 17, das heißt dem Befestigungsbereich 16 eingetrieben. Im Bereich zwischen der konischen Innenfläche 24 und der linken Stirnseite des Dübels 22 ist ein weiteres Gewinde 32' angeordnet sein, um den Konus 26 mit einer Schraube einzutreiben beziehungsweise einzupressen. Dadurch ist eine einfache und wiederholbare Verpressung des Dübels 22 unter vordefinierten Kräften ermöglicht.

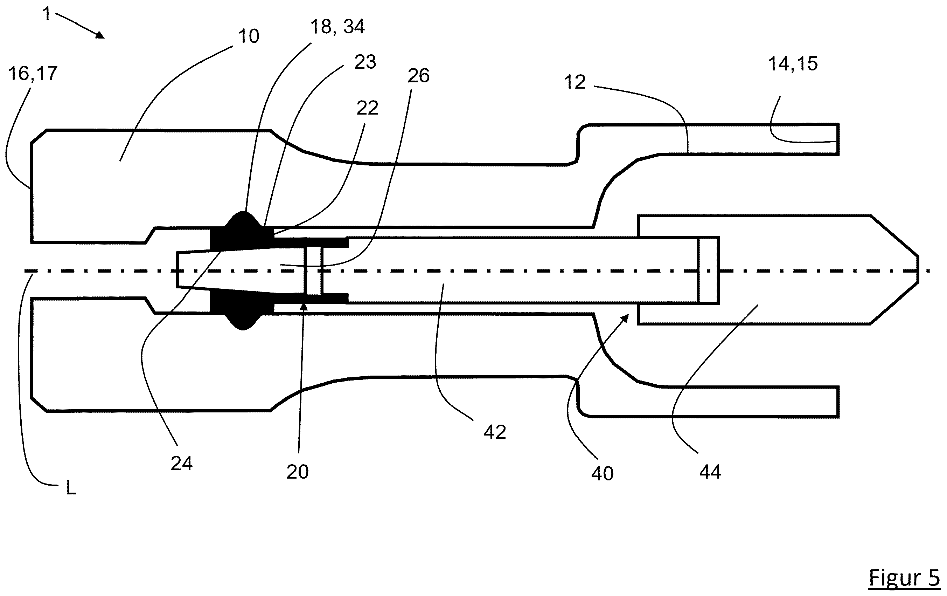

Figur 5 zeigt eine zweite Ausführungsform einer erfindungsgemäßen Rundsonotrode 1 mit Aufnahmedorn 40. Der Sonotrodenkörper 10 weist im Vergleich zu dem in Figur 1 gezeigten Sonotrodenkörper 10 eine Ausbuchtung in der zentrale Ausnehmung 12 auf. Die Ausbuchtung ist als umlaufende Nut 18 ausgebildet. Die umlaufende Nut 18 weist einen konvex nach außen gewölbten Querschnitt auf. Der Dübel 22 weist eine sich radial nach außen erstreckenden, umlaufende Vorsprung 34 auf. Der Vorsprung 34 hat einen nach außen konvexen Querschnitt, der im Wesentlichen kongruent zu dem Querschnitt der Nut 18 ausgebildet ist.

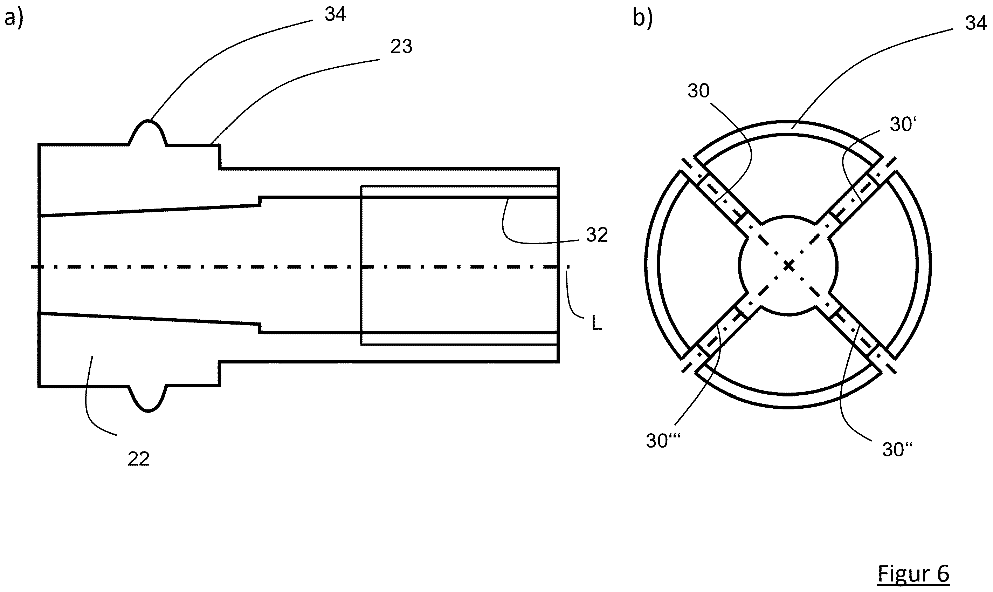

Figur 6 zeigt einen erfindungsgemäßen Dübel 22 in einer dritten Ausführungsform, wie dieser beispielsweise in Figur 5 verwendet werden kann. Figur 6a zeigt den Dübel 22 in einem Längsschnitt und Figur 6b zeigt eine Draufsicht auf die in Figur 6a links angeordnete, zweite Stirnseite des Dübels 22. Der radial sich vom zylindrischen Bereich der Außenfläche 23 des Dübels 22 weg erstreckende Vorsprung 34 ist als umlaufender Vorsprung ausgebildet, der durch die Längsschlitze 30-30‴ unterbrochen wird.

Bei der Montage des Dübels 22 wird zunächst der Dübel 22 in die Ausnehmung 12 eingeführt, bis der Vorsprung 34 in die Nut 18 einschnappt. Anschließend wir der Konus 26 eingebracht und der Dübel 22 aufgespreizt. Beim Einbringen des Konus 26 kann es notwendig sein, die einzelnen Abschnitte zwischen den Längsschlitzen 30-30‴ elastisch radial nach innen zu verformen, sodass der Vorsprung 19 in die Ausnehmung eingeführt werden kann. Beim Aufspreizen wird die Außenfläche 23 und insbesondere der Vorsprung 34 plastisch verformt.

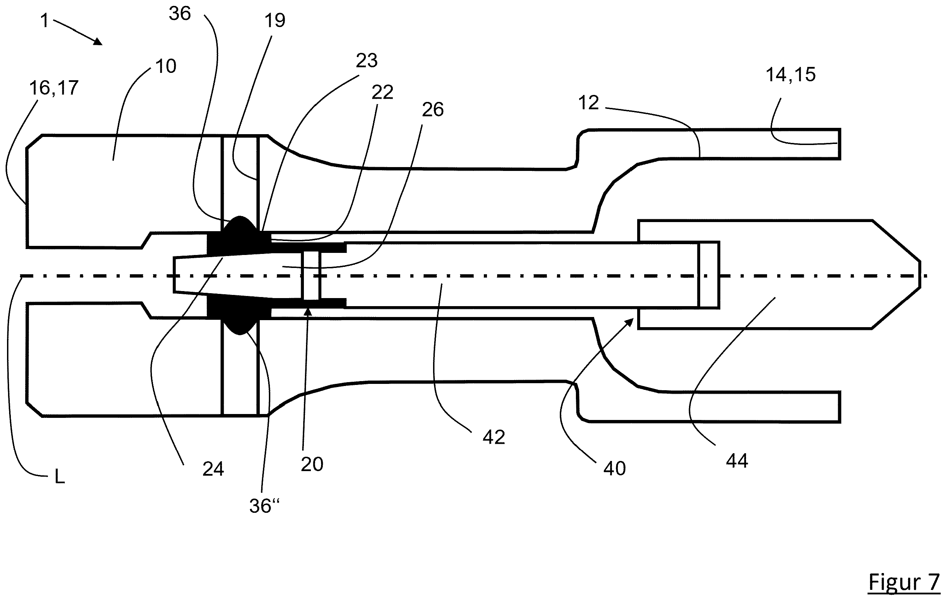

Figur 7 zeigt eine dritte Ausführungsform einer erfindungsgemäßen Rundsonotrode 1 mit Aufnahmedorn 40. Der Sonotrodenkörper 10 weist im Vergleich zu dem in Figur 5 gezeigten Sonotrodenkörper keine Ausbuchtung in Form einer radialen Nut 18, sondern vier beziehungsweise zwei durchgehende radiale Bohrungen 19 auf, sodass der Sonotrodenkörper 10 vier Ausbuchtungen enthält. Die Bohrungen 19 sind um einen Winkel von 90° zueinander versetzt. Der Dübel 22 weist vier Vorsprünge auf 36-36‴, die sich im Wesentlichen halbkugelförmig nach außen erstrecken.

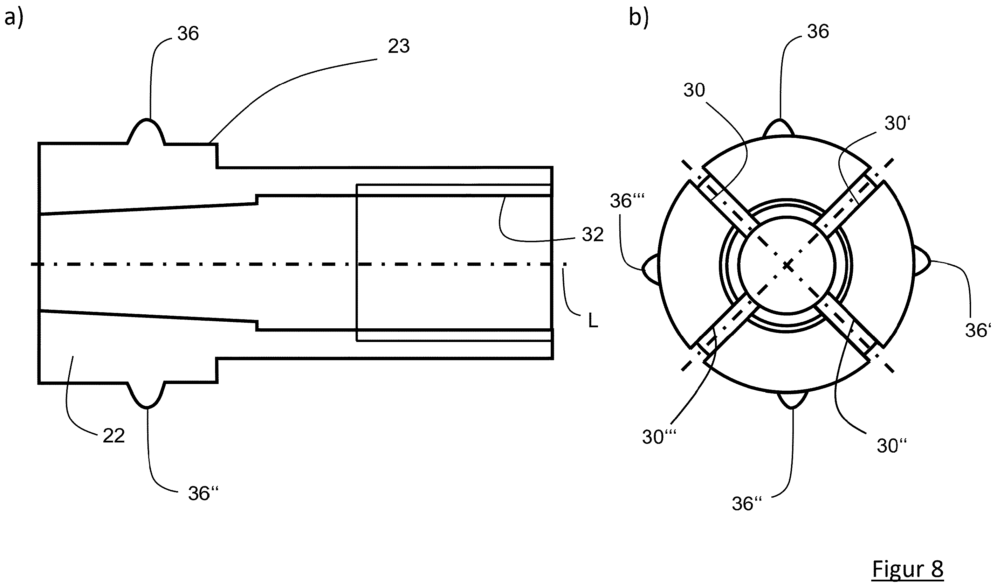

Figur 8 zeigt einen erfindungsgemäßen Dübel 22 in einer vierten Ausführungsform, wie dieser beispielsweise in Figur 7 verwendet werden kann. Figur 8a zeigt den Dübel 22 in einem Längsschnitt und Figur 8b zeigt eine Draufsicht auf die in Figur 8a links angeordnete, zweite Stirnseite des Dübels 22. Die radial sich vom zylindrischen Bereich der Außenfläche 23 des Dübels 22 weg erstreckenden Vorsprünge 36-36‴ sind um einen Winkel von 90° zueinander versetzt und jeweils mittig zischen zwei Längsschlitzen 30-30‴ angeordnet. Bei der Montage des Dübels 22 muss dieser gegebenenfalls zusätzlich um seine Längsachse gedreht werden, sodass die Vorsprünge 36-36‴ zu den Bohrungen 19 ausgerichtet sind und in diese einrasten.

### Bezugszeichenliste

- 1: Rundsonotrode
- 10: Sonotrodenkörper
- 12: zentrale Ausnehmung
- 14: Schweißbereich
- 15: erste Stirnseite
- 16: Befestigungsbereich
- 17: zweite Stirnseite
- 18: umlaufende Nut
- 19: Bohrung
- 20: Spreizelement
- 22: Dübel
- 23: Außenfläche
- 24: konische Innenfläche
- 26: Konus
- 28: erster radialer Vorsprung
- 28': zweiter radialer Vorsprung
- 28": dritter radialer Vorsprung
- 30: erster Längsschlitz
- 30': zweiter Längsschlitz
- 30": dritter Längsschlitz
- 30‴: vierter Längsschlitz
- 32: Gewinde
- 32': weiteres Gewinde
- 34: radial konvexer Vorsprung
- 36: erster kugelförmiger Vorsprung
- 36': zweiter kugelförmiger Vorsprung
- 36": dritter kugelförmiger Vorsprung
- 36‴: vierter kugelförmiger Vorsprung
- 40: Aufnahmedorn
- 42: Bolzen
- 44: Dornelement
- 50: erstes Bauteil
- 60: zweites Bauteil
- 62: kreisrunde Ausnehmung
- L: Längsachse
- I: Länge des Sonotrodenkörpers
- K_{1/4}, K_{3/4},: Knotenflächen
- M₀, M_{1/2}, M₁: Schwingungsmaxima

## Patentansprüche

1. Rundsonotrode (1) für eine Ultraschallschweißanlage zum Verschweißen von zwei Bauteilen (50, 60) aufweisend einen sich in einer Längsrichtung erstreckenden Sonotrodenkörper (10) mit einer zentralen Ausnehmung (12), einen an einer ersten Stirnseite (15) des Sonotrodenkörpers (10) angeordneten ringförmigen Schweißbereich (14), einen in der zentralen Ausnehmung (12) angeordneten Aufnahmedorn (40) zur Aufnahme eines ersten der zwei zu verschweißenden Bauteile (50), wobei der Aufnahmedorn (40) mittels eines bei der Montage verformten Spreizelements (20) in der zentralen Ausnehmung (12) gehalten ist, **dadurch gekennzeichnet, dass** eine feste Verbindung zwischen dem Aufnahmedorn (40) und dem Sonotrodenkörper (10) hergestellt ist, bei der es sich nicht um eine schwingungsentkoppelte Aufhängung über Elastomere oder Gummielemente handelt.

2. Rundsonotrode (1) nach Anspruch 1, wobei das Spreizelement (20) in einer Knotenfläche (K_{1/4}, K_{3/4}) der Rundsonotrode (1) angeordnet ist.

3. Rundsonotrode (1) nach einem der vorherigen Ansprüche, wobei das bei der Montage verformte Spreizelement (20) plastisch verformt ist.

4. Rundsonotrode (1) nach einem der vorherigen Ansprüche, wobei das Spreizelement (20) einen Dübel (22) mit einer konischen Innenfläche (24) aufweist und der Dübel (22) durch einen eingetriebenen Konus (26) aufgespreizt ist, wobei die konische Innenfläche (24) vorzugsweise einen Kegelwinkel aufweist, der im Bereich der Selbsthemmung liegt.

5. Rundsonotrode (1) nach Anspruch 4, wobei das Spreizelement (20) im Bereich der konischen Innenfläche (24) wenigstens einen Längsschlitz (30, 30', 30", 30‴) aufweist.

6. Rundsonotrode (1) nach einem der Ansprüche 4 bis 5, wobei die konische Innenfläche (24) des Spreizelements (20) zur ersten Stirnseite (15) oder zu einer gegenüberliegenden zweiten Stirnseite (17) hin geöffnet ist.

7. Rundsonotrode (1) nach einem der vorherigen Ansprüche, wobei das Spreizelement (20) an einem Außenumfang wenigstens einen radialen Vorsprung (28, 28', 28", 34, 36, 36', 36", 36‴) aufweist.

8. Rundsonotrode (1) nach Anspruch 7, wobei das Spreizelement eine Vielzahl von radialen Vorsprüngen (28, 28', 28", 36, 36', 36", 36‴) aufweist und ein der ersten Stirnseite (15) zugewandter radialer Vorsprung (28) der Vielzahl von radialen Vorsprüngen (28, 28', 28", 36, 36', 36", 36‴) in der Knotenfläche (K_{1/4}, K_{3/4}) angeordnet ist.

9. Rundsonotrode (1) nach Anspruch 7, wobei der zumindest eine radiale Vorsprung (34, 36, 36', 36", 36‴) in eine Ausbuchtung (18, 19) in der zentralen Ausnehmung (12) eingreift.

10. Rundsonotrode (1) nach einem der vorherigen Ansprüche, wobei der Aufnahmedorn (40) mit dem Spreizelement (20) verschraubt ist.

11. Rundsonotrode (1) nach Anspruch 10, wobei der Aufnahmedorn (40) ein Dornelement (44) aufweist, das in Längsrichtung der Rundsonotrode (1) verschieblich auf einem Bolzen (42) angeordnet ist, wobei vorzugsweise das Dornelement (44) über ein Vorspannelement in Längsrichtung vom Spreizelement (20) weg vorgespannt ist.

12. Rundsonotrode (1) nach einem der vorherigen Ansprüche, wobei die Rundsonotrode (1) eine longitudinal resonante Rundsonotrode (1) ist, die vorzugsweise die Länge (I) einer vollen Wellenlänge aufweist, wobei das Spreizelement (20) vorzugsweise in einer der ersten Stirnseite (15) abgewandten Knotenfläche (K_{1/4}, K_{3/4}) angeordnet ist.

13. Rundsonotrode (1) nach einem der vorherigen Ansprüche, wobei sich die zentrale Ausnehmung (12) in Längsrichtung über den gesamten Sonotrodenkörper (10) erstreckt.

14. Rundsonotrode (1) nach einem der vorherigen Ansprüche, wobei der Sonotrodenkörper (10) an der zweiten Stirnseite (17) eine Aufnahme zum Einleiten von Schwingungen aufweist, die von einem Schallwandler erzeugt werden.

15. Rundsonotrode (1) nach einem der vorherigen Ansprüche, wobei das Spreizelement (20) aus einem weicheren Metall als der Sonotrodenkörper (10) besteht.

## Claims

1. Round sonotrode (1) for an ultrasonic welding system for welding two components (50, 60), having a sonotrode body (10) extending in a longitudinal direction and having a central recess (12), an annular welding region (14) arranged on a first end side (15) of the sonotrode body (10), a receiving mandrel (40) arranged in the central recess (12) for receiving a first of the two components (50) to be welded, the receiving mandrel (40) being retained in the central recess (12) by means of a spreading element (20) deformed during assembly, **characterized in that** a fixed connection is established between the receiving mandrel (40) and the sonotrode body (10), which connection is not a vibration-decoupled suspension via elastomers or rubber elements.

2. Round sonotrode (1) according to claim 1, wherein the spreading element (20) being arranged in a nodal area (K_{1/4}, K_{3/4}) of the round sonotrode (1).

3. Round sonotrode (1) according to one of the preceding claims, wherein the spreading element (20) deformed during assembly is plastically deformed.

4. Round sonotrode (1) according to one of the preceding claims, wherein the spreading element (20) has a dowel (22) with a conical inner surface (24), and the dowel (22) is spread by a driven-in cone (26), the conical inner surface (24) preferably having a cone angle which lies in the region of self-locking.

5. Round sonotrode (1) according to claim 4, wherein the spreading element (20) comprises at least one longitudinal slot (30, 30', 30", 30‴) in the region of the conical inner surface (24).

6. Round sonotrode (1) according to one of claims 4 to 5, wherein the conical inner surface (24) of the spreading element (20) is open towards the first end side (15) or towards an opposite second end side (17).

7. Round sonotrode (1) according to one of the preceding claims, wherein the spreading element (20) comprises at least one radial projection (28, 28', 28", 34, 36, 36', 36", 36"') on an outer circumference.

8. Round sonotrode (1) according to claim 7, wherein the spreading element comprises a multiplicity of radial projections (28, 28', 28", 36, 36', 36", 36‴), and a radial projection (28), facing the first end side (15), of the multiplicity of radial projections (28, 28', 28", 36, 36', 36", 36‴) is arranged in the nodal area (K_{1/4}, K_{3/4}).

9. Round sonotrode (1) according to claim 7, wherein the at least one radial projection (34, 36, 36', 36", 36‴) engages in a bulge (18, 19) in the central recess (12).

10. Round sonotrode (1) according to one of the preceding claims, wherein the receiving mandrel (40) is screwed to the spreading element (20).

11. Round sonotrode (1) according to claim 10, wherein the receiving mandrel (40) comprises a mandrel element (44) which is arranged on a bolt (42) so as to be displaceable in the longitudinal direction of the round sonotrode (1), the mandrel element (44) preferably being prestressed in the longitudinal direction away from the spreading element (20) via a prestressing element.

12. Round sonotrode (1) according to one of the preceding claims, wherein the round sonotrode (1) is a longitudinally resonant round sonotrode (1) which preferably has the length (I) of a full wavelength, the spreading element (20) preferably being arranged in a nodal area (K_{1/4}, K_{3/4}) facing away from the first end side (15).

13. Round sonotrode (1) according to one of the preceding claims, wherein the central recess (12) extends in the longitudinal direction over the entire sonotrode body (10).

14. Round sonotrode (1) according to one of the preceding claims, wherein the sonotrode body (10) has, on the second end side (17), a receptacle for introducing vibrations which are generated by a sound transducer.

15. Round sonotrode (1) according to one of the preceding claims, wherein the spreading element (20) consists of a softer metal than the sonotrode body (10).

## Revendications

1. Sonotrode ronde (1) pour une installation de soudage à ultrasons pour le soudage de deux composants (50, 60) présentant un corps de sonotrode (10) s'étendant dans une direction longitudinale avec un évidement central (12), une zone de soudage annulaire (14) disposée sur un premier côté frontal (15) du corps de sonotrode (10), un mandrin de réception (40) disposé dans l'évidement central (12) destiné à recevoir un premier des deux composants (50) à souder, dans laquelle le mandrin de réception (40) est maintenu dans l'évidement central (12) au moyen d'un élément d'écartement (20) déformé lors du montage, **caractérisée en ce qu'**une liaison fixe est établie entre le mandrin de réception (40) et le corps de sonotrode (10), laquelle n'est pas une suspension découplée des vibrations par des élastomères ou des éléments en caoutchouc.

2. Sonotrode ronde (1) selon la revendication 1, dans laquelle l'élément d'écartement (20) est disposé dans une surface nodale (K_{1/4}, K_{3/4}) de la sonotrode ronde (1).

3. Sonotrode ronde (1) selon l'une quelconque des revendications précédentes, dans laquelle l'élément d'écartement (20) déformé lors du montage est déformé plastiquement.

4. Sonotrode ronde (1) selon l'une quelconque des revendications précédentes, dans laquelle l'élément d'écartement (20) présente une cheville (22) avec une surface intérieure conique (24) et la cheville (22) est écartée par un cône emmanché (26), dans laquelle la surface intérieure conique (24) présente de préférence un angle de cône situé dans la plage de l'autoblocage.

5. Sonotrode ronde (1) selon la revendication 4, dans laquelle l'élément d'écartement (20) présente au moins une entaille longitudinale (30, 30', 30", 30") dans la zone de la surface intérieure conique (24).

6. Sonotrode ronde (1) selon l'une quelconque des revendications 4 à 5, dans laquelle la surface intérieure conique (24) de l'élément d'écartement (20) est ouverte vers le premier côté frontal (15) ou vers un deuxième côté frontal opposé (17).

7. Sonotrode ronde (1) selon l'une quelconque des revendications précédentes, dans laquelle l'élément d'écartement (20) présente sur une périphérie extérieure au moins une partie faisant saillie radiale (28, 28', 28", 34, 36, 36', 36", 36"').

8. Sonotrode (1) selon la revendication 7, dans laquelle l'élément d'écartement présente une pluralité de parties faisant saillie radiales (28, 28', 28", 36, 36', 36", 36‴) et une partie faisant saillie radiale (28) tournée vers un des premiers côtés frontaux (15) de la pluralité de parties faisant saillie radiales (28, 28', 28", 36, 36', 36", 36‴) est disposée dans la surface nodale (K_{1/4}, K_{3/4}).

9. Sonotrode ronde (1) selon la revendication 7, dans laquelle l'au moins une partie faisant saillie radiale (34, 36, 36', 36", 36‴) vient en prise avec un renflement (18, 19) dans l'évidement central (12).

10. Sonotrode ronde (1) selon l'une quelconque des revendications précédentes, dans laquelle le mandrin de réception (40) est vissé à l'élément d'écartement (20).

11. Sonotrode ronde (1) selon la revendication 10, dans laquelle le mandrin de réception (40) présente un élément de mandrin (44) qui est disposé de manière coulissante dans le sens longitudinal de la sonotrode ronde (1) sur un axe (42), dans laquelle de préférence l'élément de mandrin (44) est précontraint par l'intermédiaire d'un élément de précontrainte dans le sens longitudinal à l'écart de l'élément d'écartement (20).

12. Sonotrode ronde (1) selon l'une quelconque des revendications précédentes, dans laquelle la sonotrode ronde (1) est une sonotrode ronde (1) résonante longitudinalement, qui présente de préférence une longueur (1) d'une longueur d'onde complète, dans laquelle l'élément d'écartement (20) est disposé de préférence dans une surface nodale (K_{1/4}, K_{3/4}) opposée à l'un des premiers côtés frontaux (15).

13. Sonotrode ronde (1) selon l'une quelconque des revendications précédentes, dans laquelle l'évidement central (12) s'étend dans le sens longitudinal sur l'ensemble du corps de sonotrode (10).

14. Sonotrode ronde (1) selon l'une quelconque des revendications précédentes, dans laquelle le corps de sonotrode (10) présente sur le deuxième côté frontal (17) un logement pour introduire des vibrations, qui sont générées par un transducteur acoustique.

15. Sonotrode ronde (1) selon l'une quelconque des revendications précédentes, dans laquelle l'élément d'écartement (20) est constitué d'un métal plus souple que le corps de sonotrode (10).
